# EUROPEAN PATENT APPLICATION

(11) **EP 4 621 981 A1**
(43) Date of publication of application: **24.09.2025**
(21) Application number: 24214759.3
(22) Date of filing: 22.11.2024
(51) Int. Cl.: H01M 50/533, H01M 50/536, H01M 50/538, H01M 50/55, H01M 50/559

(54) **CYLINDRICAL BATTERY**

(30) Priority: 21.03.2024 CN 202420557776 U
(71) Applicant: CALB Group Co., Ltd., Changzhou City, Jiangsu Province (CN)
(72) Inventor: GAO, Rongliang, Changzhou City, Jiangsu Province (CN); QI, Binwei, Changzhou City, Jiangsu Province (CN); WANG, Yawei, Changzhou City, Jiangsu Province (CN)
(74) Representative: Becker Kurig & Partner Patentanwälte mbB

(57) **Abstract**

A cylindrical battery includes a cell (10) and a first current collector (20). The cell (10) includes a cell body (11) and a first tab (12) extending from the cell body (10) and including a plurality of monolithic tabs (121) in a radial direction of the cell (10). The first current collector (20) is welded and connected to the first tab (12), and a first welding wire (21) is formed on the first current collector (20). Each monolithic tab (121) has a first end (1211) connected to the cell body (11), and an extension direction of the first end (1211) is not parallel to an extension direction of the first welding wire (21).

## Description

### BACKGROUND

### Technical Field

The present disclosure relates to the technical field of batteries, and in particular to a cylindrical battery.

### Description of Related Art

In the related art, the tab of the cylindrical battery can be electrically connected via a current collector plate and a pole assembly, and the tab and the current collector plate can be connected via welding, and when the tab and the current collector plate are connected via welding, damage to the cell body may occur due to the influence of welding energy.

### SUMMARY

The disclosure provides a cylindrical battery, so as to improve the service performance of the cylindrical battery.

The disclosure provides a cylindrical battery, including:
a cell including a cell body and a first tab, the first tab extending from the cell body, and the first tab including a plurality of monolithic tabs in a radial direction of the cell; and
a first current collector, wherein the first current collector is welded and connected to the first tab, and a first welding wire is formed on the first current collector,
wherein each of the monolithic tabs has a first end connected to the cell body, and an extension direction of the first end is not parallel to an extension direction of the first welding wire.

The cylindrical battery of the embodiment of the present disclosure includes a cell and a first current collector, the cell is electrically connected to the first current collector, the cell includes a cell body and a first tab extending from the cell body, the first tab is formed by folding a plurality of monolithic tabs, thereby ensuring the overall discharge capability of the first tab, and by making the first current collector welded and connected to the first tab, the stability of the connection between the first current collector and the first tab can be ensured, thereby ensuring the discharge capability between the first current collector and the first tab. However, the extension direction of the first welding wire on the first current collector is not parallel to the extension direction of the first end, connected to the cell body, of the monolithic tab, so that the welding energy can be reduced to strike the cell body through the adjacent monolithic tabs during the welding process between the first current collector and the first tab, and the problem of damaging the cell body can be avoided, thereby effectively improving the safety performance of the cylindrical battery.

### BRIEF DESCRIPTION OF THE DRAWINGS

For a better understanding of the present disclosure, reference may be made to the embodiments illustrated in the following drawings. The components in the drawings are not necessarily to scale, and related elements may be omitted to emphasize and clearly illustrate the features of the present disclosure. In addition, the associated elements or components may have different arrangements as known in the art. Further, in the drawings, like reference numerals designate identical or similar parts throughout the several views. In the drawings:
FIG. 1 is a schematic structural diagram of a cylindrical battery according to an exemplary implementation;
FIG. 2 is a partial schematic structural diagram of a cylindrical battery according to an exemplary implementation;
FIG. 3 is a schematic structural diagram of a cell of a cylindrical battery according to an exemplary implementation;
FIG. 4 is a schematic structural diagram of a section of a cell of a cylindrical battery according to an exemplary implementation;
FIG. 5 is a schematic structural diagram of a monolithic tab of a cylindrical battery according to an exemplary implementation; and
FIG. 6 is a schematic structural diagram of a first current collector of a cylindrical battery according to an exemplary implementation.

### Reference numerals are described below:

10, cell; 11, cell body; 12, first tab; 121, monolithic tab; 1211, first end; 1212, second end; 122, gap region; 13, second tab; 20, first current collector; 21, first welding wire; 22, first region; 221, first arc end; 222, second arc end; 23, pole connection region; 30, second current collector; 31, second welding wire; 32, second region; 321, third arc end; 322, fourth arc end; 33, housing connection region; 40, battery housing; 50, pole assembly.

### DESCRIPTION OF THE EMBODIMENTS

The technical solutions in the exemplary embodiments of the present disclosure will be described clearly and completely in combination with the drawings in the exemplary embodiments of the present disclosure. The exemplary embodiments described herein are for illustrative purposes only and are not intended to limit the scope of the present disclosure, so it is to be understood that various modifications and changes may be made to the exemplary embodiments without departing from the scope of protection of the present disclosure.

In the description of the present disclosure, the terms "first" and "second" are used for descriptive purposes only and are not to be construed as indicating or implying relative importance unless explicitly stated or limited otherwise; the term "plurality" means two or more than two; the term "and/or" includes any and all combinations of one or more of the associated listed items. In particular, reference to "the" object or "an" object is also intended to mean one of a possible plurality of such objects.

Unless otherwise specified or indicated, the terms "connection", "fixation", and the like are to be construed broadly. For example, "connection" may be fixed, or may be detachable, or may be integral, or may be electrical, or may be connected via a signal; and the "connection" may be a direct connection or an indirect connection through an intermediary. The specific meaning of the above-mentioned terms in the present disclosure can be understood by a person skilled in the art according to specific circumstances.

Further, in the description of the present disclosure, it is to be understood that the directional terms "upper", "lower", "inner", "outer", and the like, as described in terms of angles shown in the drawings and should not be construed as limiting the exemplary embodiments of the present disclosure. It will also be understood that when an element or feature is referred to as being "on", "under", or "inside" or "outside" other element(s), it can not only be directly connected "on", "under", "inside" or "outside" the other element(s), but also indirectly connected "on", "under", "inside" or "outside" the other element(s) through intervening elements.

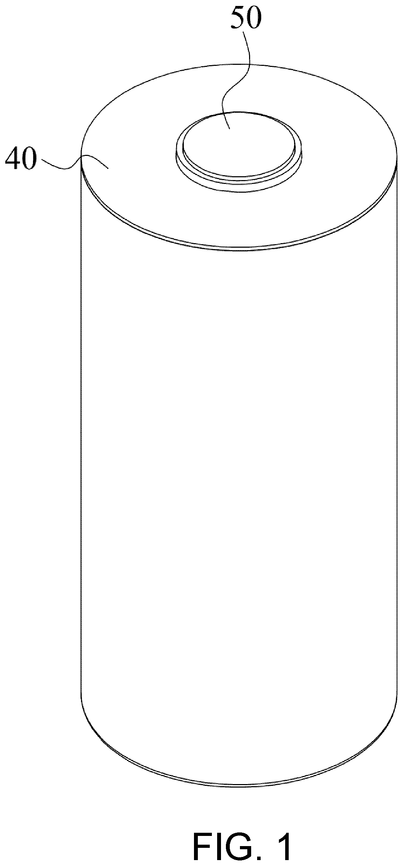

An embodiment of the present disclosure provides a cylindrical battery. With reference to FIG. 1 to FIG. 6, the cylindrical battery includes a cell 10 and a first current collector 20. The cell 10 includes a cell body 11 and a first tab 12, the first tab 12 extends from the cell body 11, and the first tab 12 includes a plurality of monolithic tabs 121 in a radial direction of the cell 10. The first current collector 20 is welded and connected to the first tab 12, and a first welding wire 21 is formed on the first current collector 20, wherein each of the monolithic tabs 121 has a first end 1211 connected to the cell body 11, and an extension direction of the first end 1211 is not parallel to an extension direction of the first welding 21 wire.

The cylindrical battery of an embodiment of the present disclosure includes a cell 10 and a first current collector 20, the cell 10 is electrically connected to the first current collector 20, the cell 10 includes a cell body 11 and a first tab 12 extending from the cell body 11, the first tab 12 is formed by folding a plurality of monolithic tabs 121, thereby ensuring the overall discharge capability of the first tab 12, and by making the first current collector 20 welded and connected to the first tab 12, the stability of the connection between the first current collector 20 and the first tab 12 can be ensured, thereby ensuring the discharge capability between the first current collector 20 and the first tab 12. However, the extension direction of the first welding wire 21 on the first current collector 20 is not parallel to the extension direction of the first end 1211, connected to the cell body 11, of the monolithic tab 121, so that the welding energy can be reduced to strike the cell body 11 through the adjacent monolithic tabs 121 during the welding process between the first current collector 20 and the first tab 12, and the problem of damaging the cell body 11 can be avoided, thereby effectively improving the safety performance of the cylindrical battery.

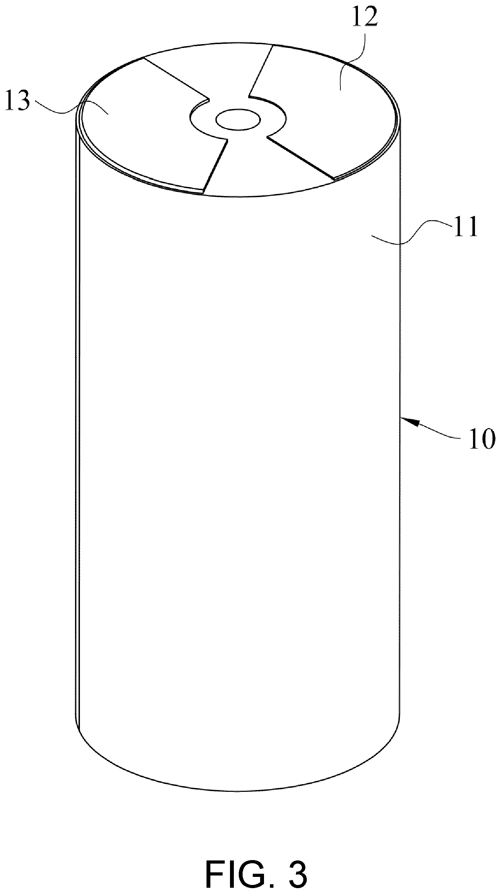

Note that, as shown in conjunction with FIG. 3, the cell 10 includes a cell body 11 and a first tab 12, the first tab 12 extending from the cell body 11.

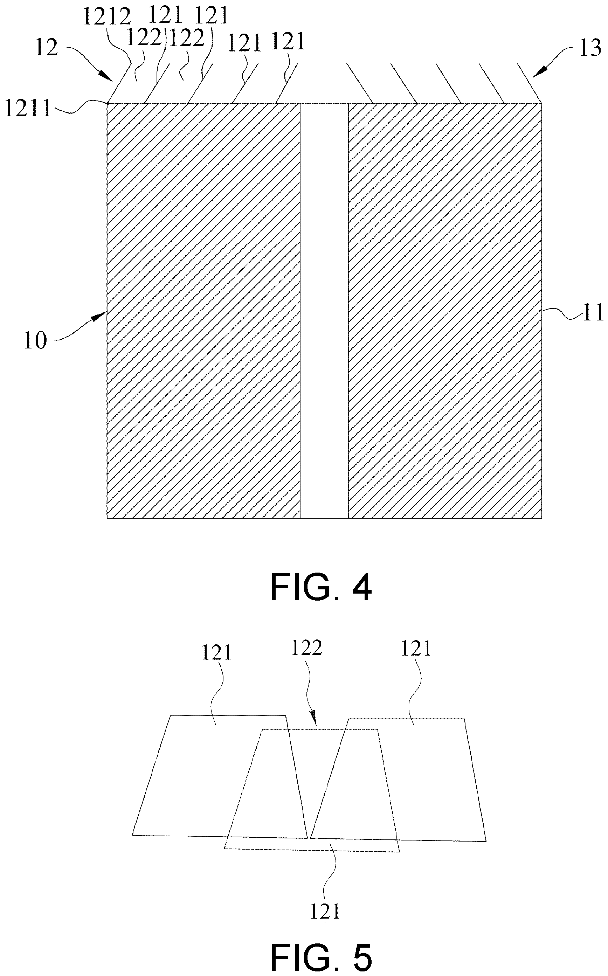

As shown in FIG. 4, in the radial direction of the cell 10, the first tab 12 includes a plurality of monolithic tabs 121, and the first tab 12 can be formed by folding the plurality of monolithic tabs 121 together, thereby ensuring the discharge capability of the first tab 12 itself. The radial direction of the cell 10 is the direction from a center of the cell 10 toward a circumferential outer surface of the cell 10.

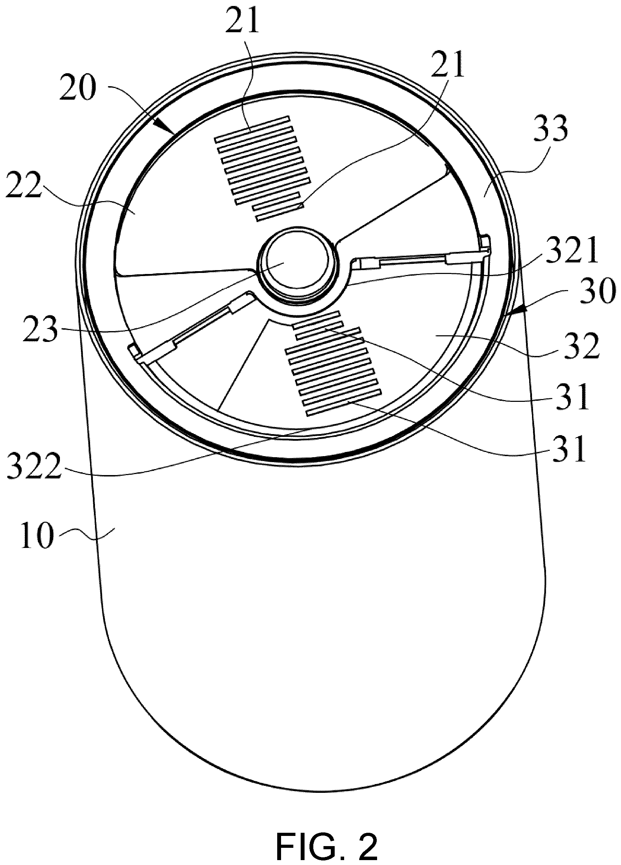

As shown in FIG. 4, the monolithic tab 121 has a first end 1211 connected to the cell body 11, and considering that the cell 10 of the cylindrical battery is wound, a shape of the monolithic tab 121 may be substantially an arc segment, and accordingly, an extension direction of the first end 1211 may be substantially an arc direction. The first end 1211 of the monolithic tab 121 is a root of the first tab 12, the root of the first tab 12 has a length dimension, and the extension direction of the first end 1211 is defined as a circumferential direction of the cell body 11, and the circumferential direction of the cell body 11 may be considered as an extension direction of the circumferential outer surface of the cell body 11. The first current collector 20 is welded and connected to the first tab 12, and a first welding wire 21 is formed on the first current collector 20, as shown in FIG. 2.

When the first current collector 20 and the first tab 12 are welded, if the extension direction of the first welding wire 21 is parallel to the extension direction of the first end 1211, there is a certain probability that the welding energy of the first current collector 20 and the first tab 12 will just hit between the adjacent monolithic tabs 121, so that the energy may penetrate the adjacent monolithic tabs 121 and hit the cell body 11, and if the spot welding is used, there is a greater probability that a plurality of single points penetrate the adjacent monolithic tabs 121. In the present embodiment, the first current collector 20 is wire-bonded to the first tab 12, and the extension direction of the first end 1211 is not parallel to the extension direction of the first welding wire 21, thereby effectively reducing the possibility of energy damage to the cell body 11 and effectively improving the safe use performance of the cylindrical battery.

The first current collector 20 and the first tab 12 may be laser welded such that the extension direction of the first end 1211 is not parallel to the extension direction of the first welding wire 21, thereby preventing laser energy from penetrating the adjacent monolithic tabs 121 to damage the cell body 11.

In one embodiment, as shown in FIG. 4, the monolithic tab 121 has a second end 1212 remote from the cell body 11, and an extension direction of the second end 1212 is not parallel to the extension direction of the first welding wire 21, thereby effectively avoiding the chance that the welding energy will damage the cell body 11.

As shown in connection with FIG. 4, the monolithic tab 121 has a first end 1211 and a second end 1212 which are opposite to each other, wherein the first end 1211 is connected to the cell body 11, and the second end 1212 is a free end. The extension direction of the first end 1211 is not parallel to the extension direction of the first welding wire 21, and the extension direction of the second end 1212 is not parallel to the extension direction of the first welding wire 21, so that the probability that welding energy hits the cell body 11 through the adjacent monolithic tabs 121 can be effectively reduced, thereby improving the safe use performance of the cylindrical battery.

The second end 1212 of the monolithic tab 121 is an end, remote from the root of the first tab 12, of the first tab 12, an end of the first tab 12 having a length dimension, and an extension direction of the second end 1212 is also defined as the circumferential direction of the cell body 11. In view of the thin dimensions of the monolithic tab 121, the first end 1211 and the second end 1212 of the monolithic tab 121 have a distinct length dimension direction, and the length dimension direction of both the first end 1211 and the second end 1212 of the monolithic tab 121 are interpreted as the circumferential direction of the cell body 11.

In view of the fact that the extension direction of the first end 1211 is parallel to the extension direction of the second end 1212, it is possible not only to facilitate the shaping of the cell 10, but also to effectively reduce the probability of the welding energy striking the cell body 11 through the adjacent monolithic tabs 121, thereby avoiding affecting the safety performance of the cell 10. The extension direction of the first end 1211 may be an arc direction and the extension direction of the second end 1212 may be an arc direction.

In one embodiment, as shown in FIG. 4, a gap region 122 is provided between two adjacent monolithic tabs 121 in the radial direction of the cell 10, and an extension direction of the gap region 122 is not parallel to the extension direction of the first welding wire 21, effectively reducing the probability of laser energy striking the cell body 11 through the gap region 122 during the welding process of the first current collector 20 and the first tab 12, for example, when the first current collector 20 and the first tab 12 are welded, thereby reducing the probability of damage to the cell body 11 and improving the safe use performance of the cylindrical battery.

The first tab 12 is formed by folding a plurality of monolithic tabs 121, and after the folding of the plurality of monolithic tabs 121 is completed, two adjacent monolithic tabs 121 have a certain gap region 122 even if they are in contact, and a size of the gap region 122 is not limited. The extension direction of the gap region 122 is not parallel to the extension direction of the first welding wire 21, thereby effectively reducing the probability that welding energy will strike the cell body 11 through the gap region 122.

The extension direction of the gap region 122 between two adjacent monolithic tabs 121 may be an arc direction.

In one embodiment, a gap region 122 is provided between two adjacent monolithic tabs 121 in a circumferential direction of the cell 10, and an extension direction of the gap region 122 is not parallel to the extension direction of the first welding wire 21, so that it is possible to avoid effectively reducing the probability of laser energy striking the cell body 11 through the gap region 122 during the welding process of the first current collector 20 and the first tab 12, for example, when the first current collector 20 and the first tab 12 are welded, thereby reducing the probability of damage to the cell body 11 and improving the safe use performance of the cylindrical battery.

As shown in connection with FIG. 5, the gap region 122 is provided between two adjacent monolithic tabs 121 on a same turn, namely, the gap region 122 is provided between two adjacent monolithic tabs 121 along the circumferential direction of the cell 10, and another turn of the monolithic tabs 121 can cover the gap region 122. If the extension direction of the gap region 122 is parallel to the extension direction of the first welding wire 21, the probability of laser energy penetrating increases, which may cause a problem of damaging the cell 10.

The extension direction of the gap region 122 between two adjacent monolithic tabs 121 may be the arc direction.

In one embodiment, an angle between the extension direction of the first end 1211 and the extension direction of the first welding wire 21 is 30°-90°, which, in addition to facilitating the shaping of the first welding wire 21, may also reduce the chance of welding energy striking the cell body 11 through the monolithic tabs 121, thereby reducing the risk of damage to the cell 10.

The extension direction of the first end 1211 may be a curved direction, and the extension direction of the first welding wire 21 may be a straight direction or a curved direction. For example, the extension direction of the first welding wire 21 may be a straight line, and the straight line and the curved line may form an acute angle, thereby reducing the risk of damaging the cell 10.

The angle between the extension direction of the first end 1211 and the extension direction of the first welding wire 21 may be 30°, 32°, 35°, 38°, 40°, 42°, 45°, 48°, 50°, 52°, 55°, 58°, 60°, 62°, 65°, 68°, 70°, 72°, 75°, 78°, 80°, 82°, 85°, 88°, or 90°.

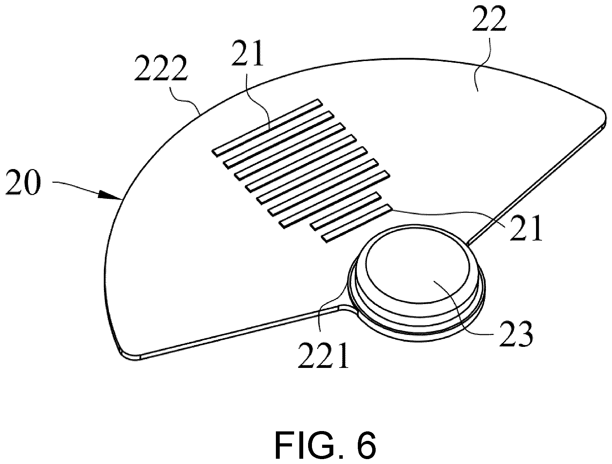

In one embodiment, as shown in FIGs. 2 and 6, the first current collector 20 includes a first region 22 on which the first welding wire 21 is formed, not only to ensure the discharge capability of the first region 22 with the first tab 12, but also to facilitate the welding of the first region 22 with the first tab 12.

In conjunction with what is shown in FIG. 6, in the radial direction of the cell 10, the first region 22 has a first arc end 221 and a second arc end 222 which are opposite to each other, a central point of the first arc end 221 and a central point of the second arc end 222 are connected to form a median line which is perpendicular to the first welding wire 21, so that the included angle between the extension direction of the first end 1211 and the extension direction of the first welding wire 21 can be effectively controlled, thereby reducing the probability that the welding energy passes through the gap region 122 and hits the cell body 11 during the welding process of the first current collector 20 and the first tab 12, which reduces the possibility of damage to the cell body 11, thereby improving the safe use performance of the cylindrical battery.

In one embodiment, the first current collector 20 includes a first region 22 on which a first welding wire 21 is formed, wherein in a radial direction of the cell 10, the first region 22 has a first arc end 221 and a second arc end 222 which are opposite to each other, and the central angle of at least one of the first arc end 221 and the second arc end 222 is 30°-150°, which can not only effectively control a size of the first region 22, facilitate the welding connection between the first region 22 and the first tab 12, but also effectively control the discharge capability between the first region 22 and the first tab 12, thereby improving the safe use performance of the cylindrical battery.

The central angle of at least one of the first arc end 221 and the second arc end 222 may be 30°, 32°, 35°, 38°, 40°, 42°, 45°, 48°, 50°, 52°, 55°, 58°, 60°, 62°, 65°, 68°, 70°, 72°, 75°, 78°, 80°, 82°, 85°, 88°, 90°, 92°, 95°, 98°, 100°, 102°, 105°, 108°, 110°, 112°, 115°, 118°, 120°, 122°, 125°, 128°, 130°, 132°, 135°, 138°, 140°, 142°, 145°, 148°, or 150°, etc.

In one embodiment, the central angle of the first arc end 221 is equal to the central angle of the second arc end 222 to facilitate not only the shaping of the first region 22 but also the shaping of the first welding wire 21, thereby improving the safe use performance of the cylindrical battery.

In one embodiment, the first welding wires 21 are provided in a plurality, which can ensure not only connection stability of the first region 22 with the first tab 12, but also reliable discharge capability between the first region 22 and the first tab 12. The first welding wires 21 may be two, or the first welding wires 21 may be more than two.

In one embodiment, the extension directions of the at least two first welding wires 21 are parallel, whereby a shaping direction of the first welding wires 21 can be reliably controlled, and the welding of the first region 22 to the first tab 12 can be facilitated, and the manufacturing efficiency of the cylindrical battery can be improved to some extent.

The extension direction of the first welding wires 21 may be a straight line, the direction extensions of the plurality of the first welding wires 21 may all be straight lines, and the extension directions of the respective first welding wires 21 extend may all coincide, whereby the extension directions of the plurality of the first welding wires 21 may be parallel.

In one embodiment, as shown in FIG. 6, the first current collector 20 includes a first region 22 on which a first welding wire 21 is formed, wherein in the radial direction of the cell 10, the first region 22 has a first arc end 221 and a second arc end 222 which are opposite to each other, wherein an arc length of the first arc end 221 is less than an arc length of the second arc end 222, which can not only adapt to the connection between the first current collector 20 and the first tab 12, but also can ensure the distribution of the resistance during the operation of the battery, thereby ensuring the uniformity of the current and improving the safe use performance of the battery.

In one embodiment, a length of the first welding wire 21, closest to the first arc end 221, among the plurality of the first welding wires 21 is less than a length of the first welding wire 21 closest to the second arc end 222, so that a size of the first region 22 can be reasonably utilized to ensure that the plurality of the first welding wires 21 can have a reasonable size of the length, both ensuring the connection capability between the first region 22 and the first tab 12 and avoiding damage to the cell body 11 during the welding process, thereby improving the safety performance of the cylindrical battery.

In one embodiment, a ratio of a length of the first welding wire 21, closest to the first arc end 221, among the plurality of the first welding wires 21 to the arc length of the first arc end 221 is 0.46-1.5, and/or a ratio of a length of the first welding wire 21, closest to the second arc end 222, among the plurality of the first welding wires 21 to the arc length of the second arc end 222 is 0.16-0.7, which can not only ensure the welding quality of the first region 22 and the first tab 12, but also avoid the welding energy exceeding the first region 22 to hit other positions during the welding process. It is also possible to ensure a reliable discharge area between the first region 22 and the first tab 12, thereby improving the safe use performance of the cylindrical battery.

After the first current collector 20 is installed, it is not excluded that there is an assembly tolerance, and if the ratio of the length of the first welding wire 21, closest to the first arc end 221, among the plurality of the first welding wires 21 to the arc length of the first arc end 221 is too large, and/or the ratio of the length of the first welding wire 21, closest to the second arc end 222, among the plurality of the first welding wires 21 to the arc length of the second arc end 222 is too large, when the first region 22 is laser-welded to the first tab 12, the welding wire may easily hit other positions beyond the first current collector 20, and may easily damage other structures.

The ratio of the length of the first welding wire 21, closest to the first arc end 221, among the plurality of the first welding wires 21 to the arc length of the first arc end 221 may be 0.46, 0.47, 0.48, 0.5, 0.52, 0.54, 0.55, 0.57, 0.58, 0.6, 0.62, 0.64, 0.65, 0.68, 0.69, 0.7, 0.72, 0.74, 0.75, 0.78, 0.8, 0.82, 0.84, 0.85, 0.88, 0.9, 0.92, 0.94, 0.95, 0.98, 1, 1.02, 1.04, 1.05, 1.08, 1.1, 1.12, 1.14, 1.15, 1.18, 1.2, 1.22, 1.24, 1.25, 1.28, 1.3, 1.32, 1.34, 1.35, 1.38, 1.4, 1.42, 1.44, 1.45, 1.48, or 1.5, etc.

The ratio of the length of the first welding wire 21, closest to the second arc end 222, among the plurality of the first welding wires 21 to the arc length of the second arc end 222 is 0.16, 0.17, 0.18, 0.2, 0.22, 0.24, 0.25, 0.27, 0.28, 0.3, 0.32, 0.34, 0.35, 0.37, 0.38, 0.4, 0.42, 0.44, 0.45, 0.47, 0.48, 0.5, 0.52, 0.54, 0.55, 0.57, 0.58, 0.6, 0.62, 0.64, 0.65, 0.68, 0.69, or 0.7, etc.

In one embodiment, a ratio of the distance between two adjacent first welding wires 21 to a minimum distance between the first arc end 221 and the second arc end 222 is 0.03-0.2, so that not only the quantity of first welding wires 21 can be ensured and the discharge capacity between the first region 22 and the first tab 12 can be improved, but also the welding energy during the welding process to affect the safety performance of the cell 10 can be avoided.

When a ratio of a spacing between two adjacent first welding wires 21 to a minimum distance between the first arc end 221 and the second arc end 222 is too large, the plurality of the first welding wires 21 are relatively loose, and the discharge between the first region 22 and the first tab 12 is small. However, when the ratio of the spacing between two adjacent first welding wires 21 to the minimum distance between the first arc end 221 and the second arc end 222 is too small, the first welding wires 21 formed during the welding process are relatively dense, and the energy generated during the welding process is relatively dense, thus affecting the quality of the cell 10 and easily causing damage to the cell 10.

The ratio of the spacing between two adjacent first welding wires 21 to THE minimum distance between the first arc end 221 and the second arc end 222 can be 0.03, 0.04, 0.05, 0.08, 0.1, 0.11, 0.12, 0.14, 0.15, 0.18, or 0.2, etc.

In one embodiment, the shortest distance of the first welding wire 21, closest to the first arc end 221, among the plurality of the first welding wires 21 from the first arc end 221 is 0.5 mm-6 mm, so that the capacity of the cell 10 can be prevented from being affected and the welding energy can be prevented from damaging the cell body 11 during welding.

When the shortest distance of the first welding wire 21, closest to the first arc end 221, among the plurality of the first welding wires 21 from the first arc end 221 is too large, the welding area of the inner ring portion of the first tab 12 is insufficient, and it is difficult to satisfy the discharge of the pole piece near a winding head, which may cause the internal resistance of the whole battery to become large, the polarization to become large, and the capacity to be not fully utilized. When the shortest distance of the first welding wire 21, closest to the first arc end 221, among the plurality of the first welding wires 21 from the first arc end 221 is too small, which has a high requirement for concentricity of assembly,the laser easily hits the cell body 11 during the welding process.

The shortest distance of the first welding wire 21, closest to the first arc end 221, among the plurality of the first welding wires 21 from the first arc end 221 may be 0.5 mm, 0.8 mm, 1 mm, 1.2 mm, 1.5 mm, 1.55 mm, 1.6 mm, 1.7 mm, 1.8 mm, 2 mm, 2.2 mm, 2.5 mm, 2.7 mm, 2.8 mm, 3 mm, 3.2 mm, 3.5 mm, 3.7 mm, 3.8 mm, 4 mm, 4.2 mm, 4.5 mm, 4.7 mm, 4.8 mm, 5 mm, 5.2 mm, 5.5 mm, 5.7 mm, 5.8 mm, or 6 mm, etc.

In one embodiment, a ratio of a thickness of the first region 22 to a total length of the plurality of the first welding wires 21 is 0.0025-0.01, and the discharge capability of the first region 22 and the first tab 12 may also be ensured on the basis of controlling the welding time of the first region 22 and the first tab 12.

The thicker the thickness of the first region 22, the longer the welding time is required to reach the same wire length at the same welding power, and if it is desirable to increase the production efficiency and reduce the welding time, the thickness of the first region 22 needs to be reduced, or the wire length needs to be reduced, but reducing the thickness of the first region 22 causes the problems of reduced strength and heat resistance, and reducing the wire length causes the problem of not satisfying the discharge area. In order to achieve a higher production efficiency, a smaller thickness of the first region 22 or a smaller length of the welding wire is required, but in order to achieve both strength and discharge, it is necessary to control the ratio of the thickness of the first region 22 to the total length of the plurality of the first welding wires 21. If the ratio of the thickness of the first region 22 to the total length of the plurality of the first welding wires 21 is too large, the thickness of the first region 22 is large and the total length of the plurality of the first welding wires 21 is too small to satisfy the discharge. If the ratio of the thickness of the first region 22 to the total length of the plurality of the first welding wires 21 is too small, the thickness of the first region 22 is small and the total length of the plurality of the first welding wires 21 is too large to satisfy the strength.

The ratio of the thickness of the first region 22 to the total length of the plurality of the first welding wires 21 may be 0.0025, 0.0028, 0.003, 0.004, 0.005, 0.006, 0.007, 0.008, 0.009, 0.0095, or 0.01, etc.

In one embodiment, the thickness of the first region 22 is 0.2 mm-0.8 mm, whereby the structural strength of the first region 22 can be secured and the first region 22 can be made to have a reliable discharge capability.

The thickness of the first region 22 may be 0.2 mm, 0.25 mm, 0.3 mm, 0.35 mm, 0.4 mm, 0.45 mm, 0.5 mm, 0.55 mm, 0.6 mm, 0.65 mm, 0.7 mm, 0.75 mm, or 0.8 mm, etc.

In one embodiment, the total length of the plurality of the first welding wires 21 is 10 mm-80 mm, and on the basis of controlling the discharge capacity between the first region 22 and the first tab 12, it is also possible to effectively control the welding efficiency and improve the manufacturing efficiency of the cylindrical battery.

The total length of the plurality of the first welding wires 21 may be 10 mm, 11 mm, 12 mm, 13 mm, 14 mm, 15 mm, 16 mm, 18 mm, 19 mm, 20 mm, 25 mm, 30 mm, 35 mm, 40 mm, 45 mm, 48 mm, 50 mm, 52 mm, 54 mm, 58 mm, 60 mm, 61 mm, 62 mm, 63 mm, 64 mm, 65 mm, 66 mm, 68 mm, 69 mm, 70 mm, 71 mm, 72 mm, 73 mm, 74 mm, 75 mm, 76 mm, 78 mm, 79 mm, or 80 mm, etc.

Note that the total length of the plurality of the first welding wires 21 is a sum of lengths of the plurality of the first welding wires 21.

In one embodiment, as shown in FIGs. 4 and 6, the cell 10 further includes a second tab 13, and the first tab 12 and the second tab 13 extend from one same end of the cell body 11, whereby a height of the cell 10 can be effectively controlled and the space efficiency of the battery housing 40 can be improved, so that the energy density of the cylindrical battery can be improved.

In one embodiment, as shown in FIG. 2, the battery further includes a second current collector 30, wherein the second current collector 30 is welded and connected to the second tab 13, and a second welding wire 31 is formed on the second current collector 30, wherein the extension direction of the first welding wire 21 is parallel to an extension direction of the second welding wire 31, so that the welding efficiency can be improved and the manufacturing efficiency of the cylindrical battery can be improved on the basis of ensuring the welding quality.

One of the first tab 12 and the second tab 13 may be a positive tab and the other may be a negative tab, and one of the first current collector 20 and the second current collector 30 may be a positive current collector disk and the other may be a negative current collector disk.

When the first current collector 20 is welded to the first tab 12 and the second current collector 30 is welded to the second tab 13, it is considered that the first welding wire 21 and the second welding wire 31 formed in parallel do not easily interfere. To facilitate the positioning of equipment, one galvanometer can be adopted for welding at the same time, or two galvanometers can be adopted for welding at the same time from inside to outside, or one galvanometer can be used to weld one pole first, and then weld the other pole at the same angle after one turn. In summary, it is not easy to generate interference between the positive tab and the negative tab welded, and the angle of the galvanometer does not need to be adjusted, such that assembly is convenient and quick.

Note that the first tab 12 and the second tab 13 may be extended from opposite ends of the cell body 11 to make an electron transfer path shortest, the transmission rate fast, and the heat generation low, thereby improving the safety performance of the battery.

In one embodiment, as shown in FIG. 1, the cylindrical battery further includes a battery housing 40 and a pole assembly 50, wherein the pole assembly 50 is provided on the battery housing 40, and the cell 10, the first current collector 20 and the second current collector 30 are all provided in the battery housing 40. One of the first current collector 20 and the second current collector 30 can be electrically connected to the battery housing 40, and the other can be electrically connected to the pole assembly 50.

Alternatively, the pole assemblies 50 may be provided in two, both the pole assemblies 50 are provided on the battery housing 40, and the first current collector 20 and the second current collector 30 may be electrically connected to the two pole assemblies 50, respectively.

In one embodiment, the first welding wire 21 and the second welding wire 31 are symmetrically arranged, not only facilitating the shaping of the first welding wire 21 and the second welding wire 31, improving the manufacturing efficiency of the cylindrical battery, but also ensuring the safe use performance of the cylindrical battery.

For example, the first welding wire 21 and the second welding wire 31 may be symmetrically arranged with respect to a median line of an end surface of the cell body 11. For example, the end surface of the cell body 11 is a round surface having the median line separating the round surface into two semicircles, and the first welding wire 21 and the second welding wire 31 may be symmetrically arranged with respect to the median line of the round surface.

In one embodiment, as shown in FIGs. 2 and 6, the first current collector 20 includes a first region 22 on which the first welding wire 21 is formed, wherein, in the radial direction of the cell 10, the first region 22 has a first arc end 221 and a second arc end 222 which are opposite to each other, and the second current collector 30 includes a second region 32, wherein, in the radial direction of the cell 10, the second region 32 has a third arc end 321 and a fourth arc end 322 which are opposite to each other, and the second welding wire 31 is formed on the second region 32. An extension direction of a median line of the first region 22 and an extension direction of a median line of the second region 32 coincide, so as to facilitate rapid assembly of the first current collector 20 and the second current collector 30, and at the same time, the probability of the welding laser striking the cell body 11 can be reduced to a minimum, thereby ensuring the safety performance of the cell 10.

The first region 22 has the first arc end 221 and the second arc end 222 which are opposite to each other, and a central point of the first arc end 221 and a central point of the second arc end 222 are connected to form the median line of the first region 22. Accordingly, the second region 32 may have the third arc end 321 and the fourth arc end 322, and a central point of the third arc end 321 and a central point of the fourth arc end 322 are connected to form a median line of the second region 32.

In one embodiment, the extension direction of the first welding wire 21 is a straight line, so that the shaping of the first welding wire 21 can be facilitated and the molding efficiency of the first welding wire 21 can be improved.

In one embodiment, the product of a length of a single first welding wire 21 and a melting width of a single first welding wire 21 is 1 mm²-5 mm², so that a connection strength of the first current collector 20 and the first tab 12 can be secured, and the discharge capability between the first current collector 20 and the first tab 12 can also be ensured.

The product of the length of the single first welding wire 21 and the melting width of the single first welding wire 21 may be 1 mm², 1.2 mm², 1.3 mm², 1.4 mm², 1.5 mm², 1.6 mm², 1.7 mm², 1.8 mm², 1.9 mm², 2 mm², 2.2 mm², 2.3 mm², 2.4 mm², 2.5 mm², 2.6 mm², 2.7 mm², 2.8 mm², 2.9 mm², 3 mm², 3.2 mm², 3.3 mm², 3.4 mm², 3.5 mm², 3.6 mm², 3.7 mm², 3.8 mm², 3.9 mm², 4 mm², 4.2 mm², 4.3 mm², 4.4 mm², 4.5 mm², 4.6 mm², 4.7 mm², 4.8 mm², 4.9 mm², or 5 mm ², etc.

In one embodiment, as shown in conjunction with FIGs. 1, 2 and 6, the first current collector 20 includes a first region 22 on which the first welding wire 21 is formed, wherein, in the radial direction of the cell 10, the first region 22 has a first arc end 221 and a second arc end 222 which are opposite to each other, and the cylindrical battery further includes: a pole assembly 50, the first current collector 20 further including a pole connection region 23, wherein the pole connection region 23 is connected to the first arc end 221, and the pole connection region 23 is connected to the pole assembly 50, thereby enabling the first tab 12 to form an electrical connection with the pole assembly 50 via the first current collector 20.

The first current collector 20 includes a first region 22 and a pole connection region 23, a circumferential outer edge of the pole connection region 23 may be substantially circular, the pole connection region 23 may be located at a central position of the battery, and a pole assembly 50 may be provided at a central position of the battery housing 40, thereby facilitating the connection of the pole assembly 50 and the pole connection region 23. The pole assembly 50 and the pole connection region 23 may be welded, or the pole assembly 50 and the pole connection region 23 may be riveted, or the pole assembly 50 and the pole connection region 23 may be electrically connected via a conductive adhesive.

In one embodiment, as shown in FIGs. 1 and 2, the battery further includes a second current collector 30 and a battery housing 40, wherein the cell 10, the first current collector 20 and the second current collector 30 are all arranged in the battery housing 40, and the pole assembly 50 is arranged on the battery housing 40; the second current collector 30 includes a second region 32 and a housing connection region 33, wherein, in the radial direction of the cell 10, the second region 32 has a third arc end 321 and a fourth arc end 322 which are opposite to each other. The housing connection region 33 is connected to the third arc end 321, the second region 32 is welded and connected to the second tab 13 by, and the housing connection region 33 is connected to the battery housing 40. That is to say, the pole assembly 50 and the battery housing 40 can be used as two electrode lead-out ends of the battery, which can not only reduce the quantity of components used for the battery, but also facilitate the subsequent grouping of batteries. The connection of buss bars to the cells, i.e. the use of the cell housing 40 as an electrode lead-out end, allows a connection area of the buss bars to be selectively increased.

The second current collector 30 includes a second region 32 and a housing connection region 33, and the housing connection region 33 may have a substantially circular ring structure, thereby securing strength to the battery housing 40. The housing connection region 33 and the battery housing 40 may be connected by welding.

As shown in connection with FIG. 1, the battery housing 40 may include a cover plate and a housing member, wherein the cover plate may be provided with a pole assembly 50, the pole assembly 50 may be electrically connected to the first current collector 20, and the cover plate may be electrically connected to the second current collector 30. In this case, the pole assembly 50 and the cover plate may be provided with insulation, thereby ensuring the insulation protection capability between the cover plate and the pole assembly 50.

It should be noted that, in the radial direction of the cell 10, the first region 22 has a first arc end 221 and a second arc end 222 which are opposite to each other, and, in the radial direction of the cell 10, the second region 32 has a third arc end 321 and a fourth arc end 322 which are opposite to each other. The first arc end 221, the second arc end 222, the third arc end 321 and the fourth arc end 322 may each be substantially arc-shaped segments. Manufacturing tolerances within a controllable range, as well as slight changes in the form of the structure, may all be considered to be included in the range of arc-shaped segments.

Note that the cylindrical battery includes a cell and an electrolyte, and a minimum unit capable of performing an electrochemical reaction such as charge/discharge. A cell refers to a unit formed by winding or laminating a stacked portion including a positive plate, a negative plate, and a separator. The cell 10 comprises a positive plate, a negative plate and a separator, and the separator realizes insulation protection for the positive plate and the negative plate.

An embodiment of the present disclosure also provides a battery pack including the above-mentioned cylindrical battery.

The battery pack of one embodiment of the present disclosure includes a cylindrical battery, wherein the cylindrical battery includes a cell 10 and a first current collector 20, the cell 10 is electrically connected to the first current collector 20, the cell 10 includes a cell body 11 and a first tab 12 extending from the cell body 11, the first tab 12 is formed by folding a plurality of monolithic tabs 121, thereby ensuring the overall discharge capability of the first tab 12, and by making the first current collector 20 welded and connected to the first tab 12, the stability of the connection between the first current collector 20 and the first tab 12 can be ensured, thereby ensuring the discharge capability between the first current collector 20 and the first tab 12. However, the extension direction of the first welding wire 21 on the first current collector 20 is not parallel to the extension direction of the first end 1211, connected to the cell body 11, of the monolithic tab 121, so that the welding energy can be reduced to strike the cell body 11 through the adjacent monolithic tabs 121 during the welding process between the first current collector 20 and the first tab 12, and the problem of damaging the cell body 11 can be avoided, thereby effectively improving the safety performance of the battery pack.

In one embodiment, the battery pack is a battery module or a battery pack.

The battery pack includes a plurality of batteries and a case for fixing the plurality of batteries.

Note that the battery pack includes a plurality of batteries, and the plurality of batteries are provided in the case. The plurality of batteries may form a battery module and then be mounted in the case. Alternatively, the plurality of batteries may be provided directly within the case, without grouping the plurality of batteries, and the case may be used to fix the plurality of batteries.

Other implementations of the present disclosure will be apparent to a person skilled in the art from consideration of the utility model creation in the description and practice herein. The present disclosure is intended to cover any variations, uses, or adaptations of the present disclosure following, in general, the principles of the disclosure and including such departures from the present disclosure as come within common knowledge or customary practice in the art to which the disclosure pertains. It is intended that the specification and exemplary implementations be considered as exemplary only, with a true scope and spirit of the disclosure being indicated by the following claims.

It should be understood that the present disclosure is not limited to the precise structures described above and shown in the accompanying drawings, and that various modifications and changes may be made without departing from the scope thereof. The scope of protection of the disclosure is only limited by the appended claims.

## Claims

1. A cylindrical battery, **characterized by** comprising:
a cell (10) comprising a cell body (11) and a first tab (12), the first tab (12) extending from the cell body (11), and the first tab (12) comprising a plurality of monolithic tabs (121) in a radial direction of the cell (10); and
a first current collector (20), wherein the first current collector (20) is welded and connected to the first tab (12), and a first welding wire (21) is formed on the first current collector (20);
wherein each of the monolithic tabs (121) has a first end (1211) connected to the cell body (11), and an extension direction of the first end (1211) is not parallel to an extension direction of the first welding wire (21).

2. The cylindrical battery according to claim 1, **characterized in that** each of the monolithic tabs (121) has a second end (1212) away from the cell body (11), and an extension direction of the second end (1212) is not parallel to the extension direction of the first welding wire (21).

3. The cylindrical battery according to claim 1, **characterized in that** a gap region (122) is provided between two adjacent monolithic tabs (121) in the radial direction of the cell (10), and an extension direction of the gap region (122) is not parallel to the extension direction of the first welding wire (21); and/or
a gap region (122) is provided between two adjacent monolithic tabs (121) in a circumferential direction of the cell (10), and the extension direction of the gap region (122) is not parallel to the extension direction of the first welding wire (21).

4. The cylindrical battery according to claim 1, **characterized in that** an angle between the extension direction of the first end (1211) and the extension direction of the first welding wire (21) is 30°-90°.

5. The cylindrical battery according to claim 1, **characterized in that** the first current collector (20) comprises a first region (22) on which the first welding wire (21) is formed;
wherein, in the radial direction of the cell (10), the first region (22) has a first arc end (221) and a second arc end (222) which are opposite to each other, and a central point of the first arc end (221) and a central point of the second arc end (222) are connected to form a median line which is perpendicular to the first welding wire (21).

6. The cylindrical battery according to claim 1, **characterized in that** the first current collector (20) comprises a first region (22) on which the first welding wire (21) is formed;
wherein, in the radial direction of the cell (10), the first region (22) has a first arc end (221) and a second arc end (222) which are opposite to each other, and at least one of the first arc end (221) and the second arc end (222) has a central angle of 30°-150°.

7. The cylindrical battery according to claim 6, **characterized in that** the central angle of the first arc end (221) is equal to the central angle of the second arc end (222).

8. The cylindrical battery according to claim 1, **characterized in that** the first welding wire (21) is provided in plurality.

9. The cylindrical battery according to claim 8, **characterized in that** extension directions of at least two of the first welding wires (21) are in parallel.

10. The cylindrical battery according to claim 8, **characterized in that** the first current collector (20) comprises a first region (22) on which the first welding wire (21) is formed;
wherein, in the radial direction of the cell (10), the first region (22) has a first arc end (221) and a second arc end (222) which are opposite to each other, and an arc length of the first arc end (221) is less than an arc length of the second arc end (222).

11. The cylindrical battery according to claim 10, **characterized in that** among the plurality of the first welding wires (21), a length of the first welding wire (21) closest to the first arc end (221) is smaller than a length of the first welding wire (21) closest to the second arc end (222).

12. The cylindrical battery according to claim 10, **characterized in that** among the plurality of the first welding wires (21), a ratio of a length of the first welding wire (21), closest to the first arc end (221), to the arc length of the first arc end (221) is 0.46-1.5, and/or among the plurality of the first welding wires (21), a ratio of a length of the first welding wire (21), closest to the second arc end (222), to the arc length of the second arc end (222) is 0.16-0.7.

13. The cylindrical battery according to claim 10, **characterized in that** a ratio of a distance between two adjacent first welding wires (21) to a minimum distance between the first arc end (221) and the second arc end (222) is 0.03-0.2.

14. The cylindrical battery according to claim 10, **characterized in that** among the plurality of the first welding wires (21), a shortest distance between the first welding wire (21), closest to the first arc end (221), and the first arc end (221) is 0.5 mm-6 mm.

15. The cylindrical battery according to claim 10, **characterized in that** a ratio of a thickness of the first region (22) to a total length of the plurality of the first welding wires (21) is 0.0025-0.01.

16. The cylindrical battery according to claim 15, **characterized in that** the thickness of the first region (22) is 0.2 mm-0.8 mm and/or the total length of the plurality of the first welding wires (21) is 10 mm-80 mm.

17. The cylindrical battery according to any one of claims 1 to 16, **characterized in that** the cell (10) further comprises a second tab (13), and the first tab (12) and the second tab (13) extend from one same end of the cell body (11).

18. The cylindrical battery according to claim 17, **characterized in that** the battery further comprises a second current collector (30) welded and connected to the second tab (13), and a second welding wire (31) is formed on the second current collector (30);
wherein the extension direction of the first welding wire (21) is parallel to an extension direction of the second welding wire (31).

19. The cylindrical battery according to claim 18, **characterized in that** the first welding wire (21) and the second welding wire (31) are arranged symmetrically.

20. The cylindrical battery according to claim 18, **characterized in that** the first current collector (20) comprises a first region (22) on which the first welding wire (21) is formed, wherein, in the radial direction of the cell (10), the first region (22) has a first arc end (221) and a second arc end (222) which are opposite to each other, and the second current collector (30) comprises a second region (32), wherein, in the radial direction of the cell (10), the second region (32) has a third arc end (321) and a fourth arc end (322) which are opposite to each other, and the second welding wire (31) is formed on the second region (32);
wherein an extension direction of a median line of the first region (22) and an extension direction of a median line of the second region (32) coincide.

21. The cylindrical battery according to any one of claims 1 to 16, **characterized in that** the extension direction of the first welding wire (21) is a straight line, and/or a product of a length of a single first welding wire (21) and a melting width of the single first welding wire (21) is 1 mm²-5 mm².

22. The cylindrical battery according to any one of claims 1 to 16, **characterized in that** the first current collector (20) comprises a first region (22) on which the first welding wire (21) is formed, wherein, in the radial direction of the cell (10), the first region (22) has a first arc end (221) and a second arc end (222) which are opposite to each other, and the cylindrical battery further comprises:
a pole assembly (50), the first current collector (20) further comprising a pole connection region (23), wherein the pole connection region (23) is connected to the first arc end (221), and the pole connection region (23) is connected to the pole assembly (50).

23. The cylindrical battery according to claim 22, **characterized in that** the battery further comprises a second current collector (30) and a battery housing (40), wherein the cell (10), the first current collector (20) and the second current collector (30) are all provided in the battery housing (40), and the pole assembly (50) is provided on the battery housing (40); and
the second current collector (30) comprises a second region (32) and a housing connection region (33), wherein, in the radial direction of the cell (10), the second region (32) has a third arc end (321) and a fourth arc end (322) which are opposite to each other, the housing connection region (33) is connected to the third arc end (321), the cell (10) further comprises a second tab (13), the second region (32) is welded and connected to the second tab (13), and the housing connection region (33) is connected to the battery housing (40).

## Amended claims

### Amended claims in accordance with Rule 137(2) EPC.

1. A cylindrical battery, **characterized by** comprising:
a cell (10) comprising a cell body (11) and a first tab (12), the first tab (12) extending from the cell body (11), and the first tab (12) comprising a plurality of monolithic tabs (121) in a radial direction of the cell (10); and
a first current collector (20), wherein the first current collector (20) is welded and connected to the first tab (12), and a first welding wire (21) is formed on the first current collector (20);
wherein each of the monolithic tabs (121) has a first end (1211) connected to the cell body (11), and an extension direction of the first end (1211) is not parallel to an extension direction of the first welding wire (21),
the first current collector (20) comprises a first region (22) on which the first welding wire (21) is formed,
wherein, in the radial direction of the cell (10), the first region (22) has a first arc end (221) and a second arc end (222) which are opposite to each other, a central point of the first arc end (221) and a central point of the second arc end (222) are connected to form a median line which is perpendicular to the first welding wire (21), and at least one of the first arc end (221) and the second arc end (222) has a central angle of 30°-150°.

2. The cylindrical battery according to claim 1, **characterized in that** each of the monolithic tabs (121) has a second end (1212) away from the cell body (11), and an extension direction of the second end (1212) is not parallel to the extension direction of the first welding wire (21).

3. The cylindrical battery according to claim 1, **characterized in that** a gap region (122) is provided between two adjacent monolithic tabs (121) in the radial direction of the cell (10), and an extension direction of the gap region (122) is not parallel to the extension direction of the first welding wire (21); and/or
a gap region (122) is provided between two adjacent monolithic tabs (121) in a circumferential direction of the cell (10), and the extension direction of the gap region (122) is not parallel to the extension direction of the first welding wire (21).

4. The cylindrical battery according to claim 1, **characterized in that** an angle between the extension direction of the first end (1211) and the extension direction of the first welding wire (21) is 30°-90°.

5. The cylindrical battery according to claim 1, **characterized in that** the central angle of the first arc end (221) is equal to the central angle of the second arc end (222).

6. The cylindrical battery according to claim 1, **characterized in that** the first welding wire (21) is provided in plurality.

7. The cylindrical battery according to claim 6, **characterized in that** extension directions of at least two of the first welding wires (21) are in parallel.

8. The cylindrical battery according to claim 6, **characterized in that** an arc length of the first arc end (221) is less than an arc length of the second arc end (222).

9. The cylindrical battery according to claim 8, **characterized in that** among the plurality of the first welding wires (21), a length of the first welding wire (21) closest to the first arc end (221) is smaller than a length of the first welding wire (21) closest to the second arc end (222).

10. The cylindrical battery according to claim 8, **characterized in that** among the plurality of the first welding wires (21), a ratio of a length of the first welding wire (21), closest to the first arc end (221), to the arc length of the first arc end (221) is 0.46-1.5, and/or among the plurality of the first welding wires (21), a ratio of a length of the first welding wire (21), closest to the second arc end (222), to the arc length of the second arc end (222) is 0.16-0.7.

11. The cylindrical battery according to claim 8, **characterized in that** a ratio of a distance between two adjacent first welding wires (21) to a minimum distance between the first arc end (221) and the second arc end (222) is 0.03-0.2.

12. The cylindrical battery according to claim 8, **characterized in that** among the plurality of the first welding wires (21), a shortest distance between the first welding wire (21), closest to the first arc end (221), and the first arc end (221) is 0.5 mm-6 mm.

13. The cylindrical battery according to claim 8, **characterized in that** a ratio of a thickness of the first region (22) to a total length of the plurality of the first welding wires (21) is 0.0025-0.01.

14. The cylindrical battery according to claim 13, **characterized in that** the thickness of the first region (22) is 0.2 mm-0.8 mm and/or the total length of the plurality of the first welding wires (21) is 10 mm-80 mm.

15. The cylindrical battery according to any one of claims 1 to 14, **characterized in that** the cell (10) further comprises a second tab (13), and the first tab (12) and the second tab (13) extend from one same end of the cell body (11).

16. The cylindrical battery according to claim 15, **characterized in that** the battery further comprises a second current collector (30) welded and connected to the second tab (13), and a second welding wire (31) is formed on the second current collector (30);
wherein the extension direction of the first welding wire (21) is parallel to an extension direction of the second welding wire (31).

17. The cylindrical battery according to claim 16, **characterized in that** the first welding wire (21) and the second welding wire (31) are arranged symmetrically.

18. The cylindrical battery according to claim 16, **characterized in that** the second current collector (30) comprises a second region (32), wherein, in the radial direction of the cell (10), the second region (32) has a third arc end (321) and a fourth arc end (322) which are opposite to each other, and the second welding wire (31) is formed on the second region (32);
wherein an extension direction of a median line of the first region (22) and an extension direction of a median line of the second region (32) coincide.

19. The cylindrical battery according to any one of claims 1 to 14, **characterized in that** the extension direction of the first welding wire (21) is a straight line, and/or a product of a length of a single first welding wire (21) and a melting width of the single first welding wire (21) is 1 mm²-5 mm².

20. The cylindrical battery according to any one of claims 1 to 14, **characterized in that** the cylindrical battery further comprises:
a pole assembly (50), the first current collector (20) further comprising a pole connection region (23), wherein the pole connection region (23) is connected to the first arc end (221), and the pole connection region (23) is connected to the pole assembly (50).

21. The cylindrical battery according to claim 20, **characterized in that** the battery further comprises a second current collector (30) and a battery housing (40), wherein the cell (10), the first current collector (20) and the second current collector (30) are all provided in the battery housing (40), and the pole assembly (50) is provided on the battery housing (40); and
the second current collector (30) comprises a second region (32) and a housing connection region (33), wherein, in the radial direction of the cell (10), the second region (32) has a third arc end (321) and a fourth arc end (322) which are opposite to each other, the housing connection region (33) is connected to the third arc end (321), the cell (10) further comprises a second tab (13), the second region (32) is welded and connected to the second tab (13), and the housing connection region (33) is connected to the battery housing (40).
